Europäisches Patentamt

European Patent Office

Office européen des brevets

(19)

(11) Numéro de publication: **0 217 699**
**B1**

(12) **FASCICULE DE BREVET EUROPEEN**

(45) Date de publication du fascicule du brevet:
29.11.89

(51) Int. Cl.⁴: **G01F 3/16,** F03C 1/00,
F03C 1/12, F01L 23/00

(21) Numéro de dépôt: 86401926.0

(22) Date de dépôt: 02.09.86

(54) Dispositif moteur du type compteur de liquide à piston, notamment pour pompe doseuse.

(30) Priorité: 05.09.85 FR 8513200

(43) Date de publication de la demande:
08.04.87 Bulletin 87/15

(45) Mention de la délivrance du brevet:
29.11.89 Bulletin 89/48

(84) Etats contractants désignés:
AT BE CH DE FR GB IT LI LU NL SE

(56) Documents cités:
DE-B- 1 152 831
FR-A- 1 284 671
FR-A- 2 343 227
GB-A- 640 662
US-A- 3 053 435
US-A- 3 414 186

(73) Titulaire: Cloup, Jean, Beaugey Carignan,
F-33360 Latresne(FR)

(72) Inventeur: Cloup, Jean, Beaugey Carignan,
F-33360 Latresne(FR)

(74) Mandataire: Fruchard, Guy et al, CABINET
BOETTCHER 23, rue la Boétie, F-75008 Paris(FR)

ACTORUM AG

## Description

La présente invention concerne un dispositif moteur, notamment pour pompe doseuse du type compteur de liquide à piston.

L'entraînement d'une pompe doseuse par une machine volumétrique, utilisant l'énergie du fluide principal dans lequel est introduit un produit additif faisant l'objet du dosage est connu de FR-A 2 343 227 mais présente des inconvénients en ce qui concerne son encombrement dès qu'il s'agit de passer des débits élevés.

On connaît par ailleurs, notamment par le document US-A-3053 435, un moteur à liquide utilisé en tant que moteur d'asservissement d'un compresseur de compensation de pression d'un réservor pressurisé, constitué par un ensemble cylindre piston différentiel, associé à un distributeur quatre voies deux positions dont les changements d'état sont mécaniquement commandés par l'équipage mobile du moteur. Cette construction est cependant complexe car elle implique la présence d'une butée d'actionnement du distributeur au-delà du corps de ce dernier, ce qui est facteur ne favorisant pas un faible encombrement du dispositif.

La présente invention entend proposer un dispositif du type de celui du document ci-dessus dans lequel le mécanisme de commande du distributeur est entièrement logé dans le moteur et est réalisé de manière beaucoup plus simple.

A cet effet donc l'invention a pour objet un dispositif moteur du type compteur de liquide à piston, notamment pour pompe doseuse, constitué par :
- un cylindre,
- un piston monté à coulissement dans le cylindre et pourvu d'au moins une tige de transmission de mouvement divisant le cylindre en deux chambres situées de part et d'autre du piston,
- un distributeur à quatre voies et deux positions, commandé par l'équipage mobile tige-piston, qui établit, dans une première position, une communication entre l'une des chambres susdites et une source de liquide sous pression et une communication entre l'autre chambre et un conduit de sortie, et, dans une seconde position, une communication de la seconde chambre avec ladite source de liquide et une communication de la première chambre avec ledit conduit de sortie.

Ce distributeur comporte dans un corps deux paires de sièges fixes concentriques à une direction coaxiale à la tige de transmission et un clapet tubulaire traversé par ladite tige et pourvu à ses extrémités de deux organes d'étanchéité périphériques pour coopérer alternativement avec l'une et l'autre paire de sièges fixes.

Selon l'une des caractéristiques principales de l'invention,
- l'un des sièges de chaque paire constitue une butée à la course du clapet,
- Le corps comporte deux organes d'appui fixes axialement distants l'un de l'autre,
- Un coulisseau est monté glissant sur la tige et est attelé au clapet par un mécanisme élastique bistable à point d'inversion tendant dans une première position à écarter le clapet du coulisseau pour les plaquer respectivement sur le siège et l'organe d'appui les plus éloignés et, dans une seconde position, à rapprocher ces derniers pour les plaquer respectivement sur le siège et l'organe d'appui les plus rapprochés,
- et deux butées sont solidaires de la tige pour éloigner le coulisseau, au voisinage des points morts haut et bas du piston, de l'appui sur lequel il est plaqué par le mécanisme élastique et l'entraîner jusqu'à dépasser le point d'inversion du mécanisme.

Dans un mode de réalisation le mécanisme élastique bistable à point d'inversion comporte deux biellettes opposées articulées par l'une de leurs extrémités audit coulisseau et une pièce élastiquement déformable en forme générale de U dont la base est solidaire du clapet et dont chacune des branches est articulée à l'autre extrémité de la biellette correspondante, l'ensemble pièces-biellettes formant un polygone dont le coulisseau est un sommet d'angle convexe dans la première position et concave dans la seconde position.

De manière préférée, la pièce en U est constituée par un ressort à cadre comprenant deux éléments, en fil élastique, latéraux en forme de U, parallèles et solidaires par leur base du clapet et par deux barrettes perpendiculaires aux éléments latéraux et reliant les branches correspondantes des U, sur lesquelles barres et biellettes sont articulées.

Enfin, dans ce mode de construction, une simplicité d'assemblage et d'importantes sections de passage seront obtenues par le fait que le cylindre susdit est constitué par une chemise dont une extrémité est fermée par le corps du distributeur et dont l'autre extrémité est ouverte sur le volume intérieur d'une enveloppe en forme de cloche coiffant ladite chemise et fermée de manière étanche par le corps du distributeur qui comporte des orifices de communication directe d'une part avec la chambre du cylindre qui lui est adjacente et d'autre part, avec le volume annulaire compris entre la chemise et l'enveloppe.

Ainsi, le compteur de liquide suivant l'invention utilise des formes et des moyens qui permettent d'obtenir un débit important pour un volume global de l'appareil qui est faible.

Le compteur de liquide suivant l'invention est, en outre, réalisé en utilisant un mode de fabrication faisant appel à des formes simples.

D'autres caractéristiques et avantages de l'invention ressortiront de la description qui suit, donnée ci-après uniquement à titre d'exemple non limitatif. On se reportera à cet effet aux dessins annexés parmi lesquels :
- la figure 1 est une vue en coupe longitudinale d'un mode de réalisation d'un compteur de liquide suivant l'invention,
- la figure 2 est une vue en coupe longitudinale du distributeur et du clapet tubulaire dans une position inversée par rapport à celle de la figure 1,
- la figure 3 est une vue en élévation schématique et en coupe du dispositif de commande à bascule du clapet,
- la figure 3A illustre partiellement un mode de réalisation simple des appuis fixes coopérant avec le coulisseau

- la figure 4 est une vue en perspective du ressort à cadre du dispositif de commande à bascule.

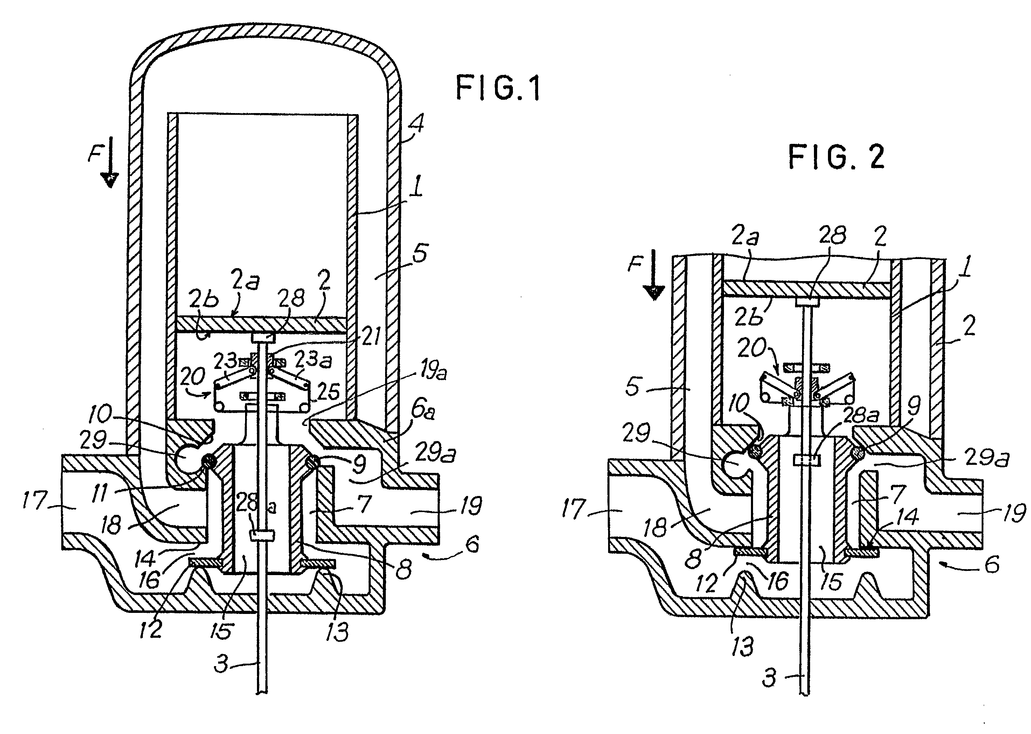

Le compteur de liquide utilisable comme moteur notamment pour pompe doseuse représenté à la figure 1, comprend une chemise cylindrique 1 dans laquelle se déplace un piston 2 qui est fixé à l'une des extrémités d'une tige 3 susceptible d'actionner une pompe doseuse non représentée au dessin. Autour de la chemise cylindrique est disposée une enveloppe 4 délimitant un espace annulaire 5 pour la circulation du liquide vers l'une des extrémités ouverte de la chemise 1 et l'une des faces 2a du piston.

Sur l'ensemble formé par la chemise cylindrique 1 et l'enveloppe 4 est fixé de façon amovible, notamment par une bride et des vis, le corps 6a d'un distributeur 6 à quatre voies 17-18-19 et 19a et deux positions alimentant la chemise cylindrique sur les deux faces du piston.

La chemise cylindrique 1 est réalisée de préférence en verre, ce qui la rend inusable et permet d'obtenir un coefficient de frottement avec le piston 2, en matériau adéquat, extrêmement bas.

Le corps 6a du distributeur, qui est cylindrique comme l'enveloppe 4, présente un alésage central 7 dans lequel se déplace axialement un clapet tubulaire 8 comportant à l'une de ses extrémités un joint d'étanchéité rigide 9 susceptible de venir en contact avec deux sièges 10 et 11 et d'assurer une limitation de la course dudit clapet.

A son autre extrémité le clapet tubulaire 8 présente un joint d'étanchéité souple 12 susceptible de venir en appui contre un siège 13 prévu sur le fond du carter et un siège 14 prévu autour de l'alésage central 7 du carter.

A l'intérieur de l'alésage 15 du clapet tubulaire 8 s'étend la tige 3 du piston qui traverse le corps 6a du distributeur et s'étend à l'extérieur de celui-ci.

L'alésage 7 du distributeur est en communication par un orifice de passage 16 avec une tubulure d'entrée du liquide 17 et par un conduit de passage 18 avec l'espace annulaire 5.

Ainsi, selon la position du clapet tubulaire 8, en contact avec le siège 12 ou le siège 14, la tubulure 17 communique soit avec le conduit 18, soit avec l'alésage 15 du clapet qui débouche directement dans la voie 19a elle-même directement ouverte sur la chambre de la chemise cylindrique située du côté de la face 2b du piston 2.

Par ailleurs, la tubulure 19 de sortie de liquide est en communication sélectivement suivant la position du clapet 8 soit avec l'alésage 7, soit avec la chambre de la chemise cylindrique située du côté de la face 2b du piston 2 par la voie 19a et une chambre 25 du corps de distributeur.

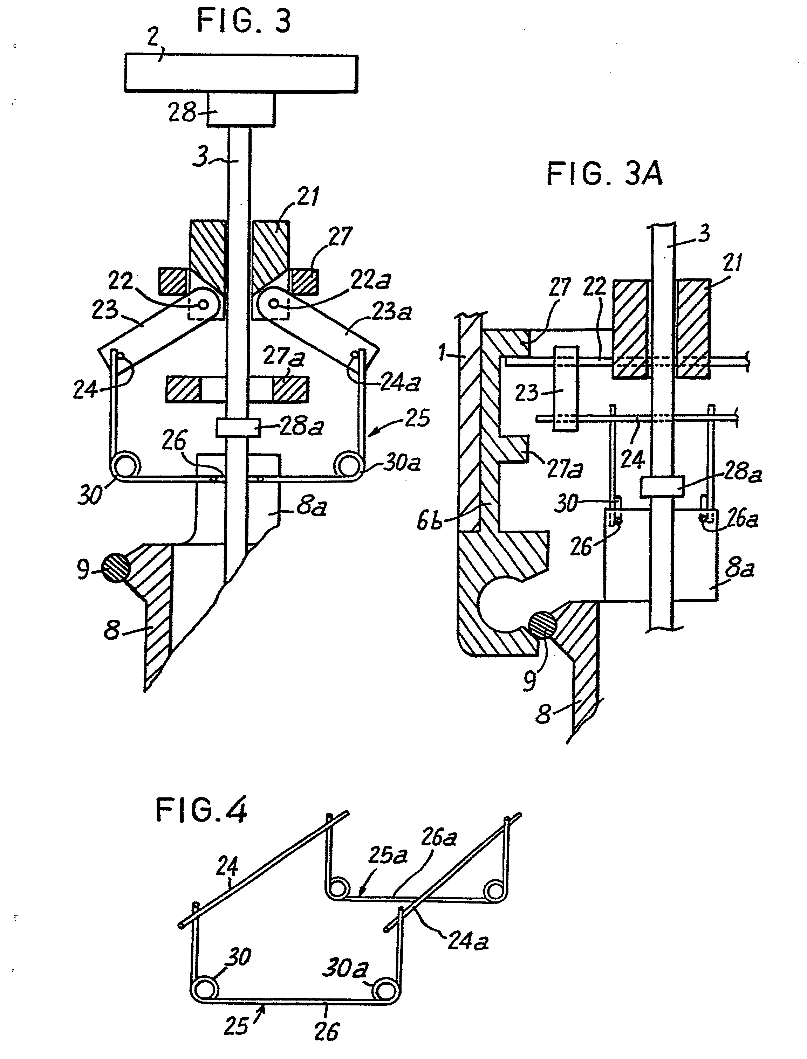

Le clapet 8 est attelé à un coulisseau 21 d'un mécanisme élastique bistable à point d'inversion 20 représenté à plus grande échelle figure 3. Ce mécanisme a pour fonction de commander le changement d'état de fermeture des clapets du distributeur et de maintenir cet état pendant la majeure partie de chaque course aller ou retour du piston 2.

Ainsi le coulisseau 21 est monté libre le long de la tige 3 de transmission et porte deux axes 22 et 22a sur lesquels sont articulées l'une des extrémités de chacune des biellettes 23 et 23a. L'autre extrémité desdites biellettes est articulée en 24 et 24a à une pièce 25 qui, vue de face comme sur la figure 3, présente la forme d'un U. En fait, ainsi que le montre la figure 4, cette pièce est constituée par deux éléments de ressort 25 et 25a en U dont les branches verticales peuvent s'écarter et se rapprocher élastiquement l'une de l'autre. Pour augmenter l'élasticité de ces branches, on a prévu à chaque angle du U des boucles d'élasticité telles que 30, 30a. Ces boucles seront de préférence multiples, mais on peut imaginer une base en U sans boucle. Les deux éléments 25 et 25a sont réunis par des barrettes de liaison 24 24a qui constituent les axes d'articulation des secondes extrémités des biellettes.

Le ressort à cadre ainsi constitué est attelé par tout moyen connu à une prolongation 8a du clapet tubulaire 8 par la zone médiane 26 26a de chacune des bases du U des pièces 25-25a.

On voit sur les figures 1,2 et 3 que le mécanisme élastique peut prendre deux configurations, l'une en forme de polygone (pentagone) qui est convexe à l'angle dont le sommet est matérialisé par le coulisseau 21 (figures 1 et 3) ou concave à ce même angle (figure 2). Le passage de l'une à l'autre de ces configurations est réalisé en rapprochant ou éloignant le coulisseau 21 de la base 26 26a de la pièce à ressort, à l'encontre tout d'abord de l'effet des branches du U qui s'oppose à ce déplacement jusqu'à un point dans lequel les barres 24 24a et les axes 22 22a sont dans un même plan, puis qui accompagne le mouvement au-delà de ce point.

Des butées fixes 27 et 27a sont prévues dans la chemise 1, représentées ici schématiquement au centre de celle-ci pour être traversées par la tige 3. La figure 3A illustre sommairement une réalisation pratique possible de ces butées 27 et 27a. Ces butées constituent des zones d'appui pour le coulisseau 21 dans les deux configurations du polygône susdites. Ainsi dans sa configuration de polygone convexe, le coulisseau 21, ou les axes 22, 22a (voir figure 3A), sont en appui sur la butée fixe 27 alors que l'organe d'étanchéité 9 est en appui sur le siège 11. La distance séparant la butée 27 du siège 11 est plus courte que la distance séparant le coulisseau 21 de l'organe d'étanchéité 9 si le mécanisme pouvait prendre son extension maximale à l'état libre. Il résulte de celà qu'une force résiduelle est appliquée par le mécanisme 20 au clapet 8 tendant à appliquer l'organe d'étanchéité 9 sur le siège 11.

Dans la configuration du mécanisme en polygone concave illustrée par la figure 2, le coulisseau 21 (ou les axes des biellettes 23 23a) prend appui sur la butée 27a tandis que l'organe d'étanchéité 9 est arrêté par le siège 10. Comme la distance séparant la butée 27a du siège 10 est supérieure à la distance qui séparerait le coulisseau 21 de l'organe 9 si le mécanisme 20 était libre d'atteindre sa position de repos, il subsiste une force residuelle qui tend à appliquer l'organe d'étanchéité 9 sur le siège 10.

On voit, par cette disposition qu'une "mémoire" mécanique des deux positions du clapet tubulaire 8 est assurée et qu'il faut appliquer une force extérieure pour faire changer l'état de ce clapet.

Cette force extérieure provient de l'action de deux butées 28 et 28a (ici des épaulements) fixes sur la tige 3 et distants l'un de l'autre d'une longueur sensiblement égale à la course du piston 2. Chacun de ces épaulements, respectivement au voisinage des points morts haut et bas de la course du piston, vient heurter le coulisseau 21 pour l'entraîner jusqu'au-delà du point d'inversion du mécanisme 20 à partir duquel, par son effet élastique, ce dernier plaque le coulisseau contre l'autre butée fixe 27 ou 27a et déplace le clapet 8 d'un siège à l'autre.

On notera à ce propos qu'il est possible de régler la distance séparant ces épaulements 28 28a en prévoyant l'un d'eux au moins réglable en position le long de la tige 3 permettant ainsi un réglage de la course motrice.

Le compteur de liquide suivant l'invention fonctionne de la manière suivante : comme représenté à la figure 1, le piston 2 se déplace dans le sens de la flèche F et le clapet 8 est en appui par son joint 9 contre le siège 11 et par son joint 12 contre le siège 13, de telle sorte que le liquide sous pression entrant par la tubulure 17 est dirigé par l'orifice 16 dans l'alésage 7, par le conduit 18 et par l'espace annulaire 5 dans le cylindre 1 du côté de la face 2a du piston.

Par ailleurs, le liquide se trouvant du côté de la face 2b du piston s'échappe par l'espace circulaire 29 et le conduit 29a vers la tubulure 19 de sortie de liquide.

Dès que le piston 2 parvient en fin de course dans le sens de la flèche F, la butée 28 vient en contact avec le coulisseau 21 qui était en appui sur la butée fixe 27 et qui alors coulisse sur la tige 3 en déplaçant les axes 22 et 22a vers le clapet, le ressort à cadre étant fixe du fait que le clapet 8 est en appui par son joint rigide 9 sur le siège 11. Dès que les axes ont dépassé le niveau des barrettes 24, 24a, le ressort du mécanisme 20 attire brutalement le coulisseau 21 contre la butée fixe 27a qui l'arrête non moins brutalement, créant une réaction dans l'ensemble du mécanisme dont l'effet décolle le clapet 8 des sièges 11 et 13 pour le plaquer contre les sièges 10 et 14. Il se produit alors une inversion de l'alimentation des chambres du cylindre, car le liquide entrant par la tubulure 17 est dirigé par l'orifice 16 et par l'alésage central 15 du clapet 8 vers l'espace du cylindre 1 situé du côté de la face 2b du piston qui se déplace de ce fait en sens inverse de la flèche F et le liquide se trouvant dans le cylindre du côté de la face 2a du piston s'écoule par l'espace annulaire 5, par le conduit 18, par l'espace annulaire compris entre le clapet 8 et l'alésage 7 du corps 6a vers la chambre, l'espace 29 et la tubulure 19 de sortie du liquide.

Cette configuration est illustrée par la figure 2.

Dès que le piston 2 parvient en fin de course lors de son déplacement en sens inverse de la flèche F, la butée 28a vient en contact avec le coulisseau 21 qui décolle de l'appui 27a, déforme le polygone concave jusqu'à passer le point d'inversion susdit, ce qui est possible du fait que le clapet 8 est arrêté par le siège 10, après lequel point d'inversion le coulisseau vient heurter l'appui 27 et par réaction, du fait de la force élastique non encore libérée, provoque le mouvement du clapet 8 en direction des sièges 11 et 13.

La figure 3A, sur laquelle on retrouve des éléments déjà décrits avec les mêmes références, montre schématiquement une réalisation pratique des appuis fixes 27, 27a. Ceux-ci sont réalisés comme des rebords d'une partie 6b supérieure du corps de distributeur 6a qui constitue manchon de centrage de la chemise 1 en verre. Ces rebords 27, 27a coopèrent avec les extrémités des axes 22 et 22a d'articulation des biellettes 23, 23a sur le coulisseau 21, qui s'étendent à l'extérieur de ce coulisseau parallèlement à un diamètre de la chemise 1. L'action des butées d'entraînement 28 et 28a se produit directement sur le coulisseau 21 alors que l'action des butées 27 et 27a est transmise au coulisseau par les axes 22 et 22a.

Le mode de réalisation décrit peut comporter des variantes dans l'esprit de l'invention. C'est ainsi que le mécanisme 20 élastique peut être de construction différente mettant en oeuvre des biellettes supplémentaires articulées entre les biellettes 23 23a et la prolongation 8a du clapet et rappelée constamment l'une vers l'autre par un organe élastique de rappel. Par ailleurs, on peut remplacer l'organe d'étanchéité souple 12 par un joint torique qui, au lieu de coopérer avec des sièges coopérerait avec des portées de coulisseau du clapet 8 ménagées de part et d'autre de l'ouverture 16. On peut également prévoir des organes d'étanchéité au lieu et place des organes 9 et 12 qui soient déformables dans un sens de déplacement du clapet et rigides dans l'autre sens si bien que, ces organes montés en opposition, les butées à la course du clapet seraient par exemple assurées par l'un des sièges 10 ou 11 et l'autre opposé des sièges 13 ou 14 respectivement.

Il est enfin possible de placer le conduit 18 dans un plan perpendiculaire à celui des figures 1 et 2, voire de le dédoubler en deux conduits opposés pour gagner en encombrement extérieur de l'appareil.

L'invention trouve une application intéressante dans le domaine des moteurs hydrauliques du type à piston alternatif.

## Revendications

1. Dispositif moteur du type compteur de liquide à piston, notamment pour pompe doseuse, constitué par:
   - un cylindre (1),
   - un piston (2) monté à coulissement dans le cylindre (1) et pourvu d'au moins une tige (3) de transmission de mouvement, divisant le cylindre en deux chambres situées de part et d'autre du piston,
   - un distributeur (6) à quatre voies (17, 18, 19, 19a) et deux positions, commandé par l'équipage mobile tige-piston, qui établit, dans une première position, une communication entre l'une des chambres susdites et une source de liquide sous pression et une communication entre l'autre chambre et un conduit de sortie, et, dans une seconde position, une communication de la seconde chambre avec ladite source de liquide et une communication de la première chambre avec ledit conduit de sortie,
   ce distributeur comportant dans un corps deux paires de sièges fixes (10, 14 et 11, 13) concentriques à une direction coaxiale à la tige (3) de transmission et un clapet tubulaire (8) traversé par ladite tige (3) et pourvu à ses extrémités de deux organes d'étanchéité (9, 12) périphériques pour coopérer alternativement avec l'une (10, 14) et l'autre (11, 13) paire de sièges fixes, caractérisé en ce qu l'un (10, 11) des sièges de chaque paire constitue une butée à la course du clapet (8), en ce que le corps comporte deux organes d'appui (27, 27a) fixes axialement distants l'un de l'autre, en ce qu'un coulisseau (21) est monté glissant sur la tige (3) et est attelé au clapet (8) par un mécanisme (20) élastique bistable à point d'inversion tendant dans une première position à écarter le clapet (8) du coulisseau (21) pour les plaquer respectivement sur le siège (11) et l'organe d'appui (27) les plus éloignés et dans une seconde position à rapprocher ces derniers pour les plaquer respectivement sur le siège (10) et l'organe d'appui (27a) les plus rapprochés, et en ce que deux butées (28, 28a) sont solidaires de la tige (3) pour éloigner le coulisseau (21), au voisinage des points morts haut et bas du piston (2), de l'appui (27, 27a) sur lequel il est plaqué par le mécanisme élastique (20) et l'entraîner jusqu' à dépasser le point d'inversion du mécanisme (20).

2. Dispositif selon la revendication 1, caractérisé en ce que le mécanisme (20) élastique bistable à point d'inversion comporte deux biellettes (23, 23a) opposées, articulées par l'une de leurs extrémités audit coulisseau (21) et une pièce (25) élastiquement déformable en forme générale de U dont la base est solidaire du clapet (8) et dont chacune des branches est articulée à l'autre extrémité de la biellette correspondante, l'ensemble pièces (25) – biellettes (23, 23a) formant un polygone dont le coulisseau (21) est un sommet d'angle convexe dans la première position et concave dans la seconde position.

3. Dispositif selon la revendication 2, caractérisé en ce que la pièce en U (25) est constituée par un ressort à cadre comprenant deux éléments (25, 25a), en fil élastique, latéraux en forme de U, parallèles et solidaires par leur base (26, 26a) du clapet (8) et par deux barrettes (24, 24a) perpendiculaires aux éléments latéraux (25, 25a) et reliant les branches correspondantes des U, sur lesquelles barrettes les biellettes (23, 23a) sont articulées.

4. Dispositif selon la revendication 3, caractérisé en ce que chacun des éléments latéraux susdits (25, 25a) comporte au moins une boucle (30, 30a) d'élasticité à chaque angle du U.

5. Dispositif selon la revendication 1, caractérisé en ce que le clapet comporte un organe d'étanchéité (9) rigide et un organe d'étanchéité (12) souple déformable en flexion dans une direction parallèle au déplacement du clapet (8).

6. Dispositif selon la revendication 1, caractérisé en ce que le cylindre (1) susdit est constitué par une chemise dont une extrémité est fermée par le corps (6a) du distributeur (6) et dont l'autre extrémité est ouverte sur le volume intérieur (5) d'une enveloppe (4) en forme de cloche coiffant ladite chemise et fermée de manière étanche par le corps (6a) du distributeur (6) qui comporte des orifices de communication (18,19a) directe d'une part avec la chambre du cylindre qui lui est adjacente et d'autre part, avec le volume annulaire compris entre la chemise et l'enveloppe.

7. Dispositif selon la revendication 6 caractérisé en ce que ladite chemise (1) est en verre.

**Patentansprüche**

1. Motorvorrichtung nach Art eines Kolbenflüssigkeitsmessers, insbesondere für eine Dosierpumpe,
mit einem Zylinder (1),
mit einem Kolben (2), der im Zylinder (1) verschiebbar gehalten ist und mit mindestens einer Stange (3) zur Bewegungsübertragung versehen ist und der den Zylinder in zwei zu seinen beiden Seiten angeordnete Kammern unterteilt,
mit einem zwei Stellungen aufweisenden Vierwegeventil (6, 17, 18, 19, 19a), das durch das bewegliche Kolbenstangenorgan gesteuert ist, welches in einer ersten Stellung eine Verbindung zwischen einer, der Kammern und einer druckbeaufschlagten Flüssigkeitsquelle und eine Verbindung zwischen der anderen Kammer und einem Ausgangskanal und in einer zweiten Stellung eine Verbindung der zweiten Kammer mit der Flüssigkeitsquelle und eine Verbindung der ersten Kammer mit dem Ausgangskanal herstellt,
wobei das Ventil in einem Gehäuse zwei Paare ortsfester, in zur Übertragungsstange (3) koaxialer Richtung konzentrischer Sitze (10, 14 und 11, 13) und eine rohrförmige Ventilklappe (8) aufweist, die von der Stange (3) durchdrungen ist und an ihren Enden mit zwei umfangsseitigen Dichtelementen (9, 12) versehen ist, die abwechselnd mit dem einen (10, 14) und dem anderen (11, 13) Paar ortsfester Sitze zusammenarbeiten, dadurch gekennzeichnet, daß einer (10, 11) der Sitze jedes Paares einen Anschlag im Wege der Ventilklappe (8) bildet, daß das Gehäuse zwei Abstützelemente (27, 27a) besitzt, die in axialem Abstand voneinander ortsfest gehalten sind, daß ein Gleitstück (21) auf der Stange (3) gleitend gehalten und mit der Ventilklappe (8) durch eine elastische, im Umkehrpunkt bistabile Mechanik (20) gekuppelt ist, die in einer ersten Position die Ventilklappe (8) vom Gleitstück (21) am weitesten wegbewegt und diese gegen den Sitz (11) bzw. das Abstützelement (27) drückt und in einer zweiten Position die beiden letzteren wieder am dichtesten aneinander heran bringt und diese gegen den Sitz (10) und das Abstützelement (27a) drückt, und daß zwei Widerlager (28, 28a) mit der Stange (3) fest verbunden sind: die das Gleitstück (21) im Bereich des oberen bzw. des unteren Totpunktes des Kolbens (2) vom Abstützelement (27, 27a) wegbewegen, gegen das es durch die elastische Mechanik (20) gedrückt ist, und es bis über den Umkehrpunkt der Mechanik (20) hinwegziehen.

2. Vorrichtung nach Anspruch 1, dadurch gekennzeichnet, daß die elastische, im Umkehrpunkt bistabile Mechanik (20) zwei gegengerichtete Schwenkarme (23, 23a) aufweist, die mit ihren Enden am Gleitstück (21) und an einem elastisch verformbaren, die Form eines U aufweisenden Elementes (25) angelenkt sind, dessen Grundteil mit der Ventilklappe (8) fest verbunden ist und dessen Schenkel mit dem jeweils anderen Ende des betreffenden Schwenkarmes schwenkbar verbunden sind, wobei die Gesamtheit aus Elemente (25) und Schwenkarme (23, 23a) ein Polygon bilden, bei dem das Gleitstück (21) die Spitze eines in der ersten Position konvexen und in der zweiten Position konkaven Winkels bildet.

3. Vorrichtung nach Anspruch 2, dadurch gekennzeichnet, daß das U-förmige Element (25) durch eine Rahmenfeder aus elastischem Draht mit zwei U-förmigen seitlichen Gliedern (25, 25a) gebildet ist, die parallel sind und an ihrem Grundteil (26, 26a) mit der Ventilklappe (8) fest verbunden und an zwei Stegen (24, 24a), die senkrecht zu den seitlichen Gliedern (25, 25a) sind und die betreffenden Schenkel der Us verbinden, an den Schwenkarmen (23, 23a) angelenkt sind.

4. Vorrichtung nach Anspruch 3, dadurch gekennzeichnet, daß jedes der seitlichen Glieder (25, 25a) an jeder Ecke des U mindestens eine elastische Schlaufe (30, 30a) besitzt.

5. Vorrichtung nach Anspruch 1, dadurch gekennzeichnet, daß die Ventilklappe ein steifes Dichtelement (9) und ein weiches in einer Richtung parallel zur Verschiebebewegung der Ventilklappe (8) durchbiegend verformbares Dichtelement (12) aufweist.

6. Vorrichtung nach Anspruch 1, dadurch gekennzeichnet, daß der Zylinder (1) durch einen Mantel gebildet ist, dessen eines Ende durch das Gehäuse (6a) des Ventils (6) verschlossen und dessen anderes Ende zum Innenraum einer Hülle (4) offen ist, die die Form einer Glocke besitzt, welche den Mantel überdeckt und durch das Gehäuse (6a) des Ventils (6) dicht verschlossen ist, das unmittelbare Verbindungsöffnungen (18, 19a) einerseits mit der jeweils benachbarten Zylinderkammer und andererseits mit dem zwischen Mantel und Hülle eingeschlossenen Ringvolumen besitzt.

7. Vorrichtung nach Anspruch 6, dadurch gekennzeichnet, daß der Mantel (1) aus Glas ist.

**Claims**

1. A driving device of the piston-flowmeter type, in particular for a proportioning pump, said device being constituted by:
   − a cylinder (1)
   − a piston (2) which is slidably mounted within the cylinder (1), which is provided with at least one motion transmission rod (3), and which divides the cylinder into two chambers located on each side of said piston,
   − a two-portion four-way (17, 18, 19, 19a) distributor (6) controlled by the moving system of rod and piston so that, in a first position, a communication is established between one of said chambers and a supply of fluid under pressure whilst a communication is established between the other chamber and an outlet nozzle and so that, in a second position, a communication is established between the second chamber and said fluid supply whilst a communication is established between the first chamber and said discharge nozzle,

said distributor being provided within a body with two pairs of fixed valve-seats (10, 14 and 11, 13) located in concentric relation to a direction which is coaxial with the transmission rod (3) and with a tubular valve (8) traversed by said rod (3), said valve being provided at the ends thereof with two peripheral seals (9, 12) for cooperating alternately with each pair of fixed valve-seats (10, 14 and 11, 13), characterized in that one valve-seat (10, 11) of each pair constitutes an end-of-travel stop for the valve (8), in that the body includes two fixed abutments (27, 27a) axially spaced apart, in that a slide-block (21) is mounted on the rod (3) and is coupled to the valve (8) by means of a bistable resilient mechanism (20) having a point of reversal which tends to move the valve (8) away from the slide-block (21) in a first position in order to apply said valve (8) and said slide-block (21) respectively on the seat (11) and on the fixed abutment (27) the more spaced apart, and to move said valve (8) towards said slide-block (21) in a second position, in order to apply said valve (8) and said slide-block (21) respectively on the seat (10) and on the fixed abutment (27a) the less spaced apart, and in that two abutments (28, 28a) are rigidly fixed to the rod (3) in order to move the slide-block in the vicinity of the top and bottom dead centers of the piston (2) away from the fixed abutment (27, 27a) on which it is applied by the resilient mechanism (20) and to cause displacement of said slide-block (21) until it passes beyond the point of reversal of said mechanism (20).

2. A device according to claim 1, characterized in that the bistable resilient mechanism (20) having a point of reversal comprises two opposite link-arms (23, 23a) pivotally attached to said slide-block (21) at one end and an elastically deformable component (25) having the general shape of a U, the base of which is rigidly fixed to the valve (8) and each arm of which is pivotally attached to the other end of the corresponding link-arm, the assembly of component (25) and link-arms (23, 23a) being so arranged as to form a polygon in which the slide-block (21) constitutes a convex summit in the first position and a concave summit in the second position.

3. A device according to claim 2, characterized in that the U-shaped component (25) is constituted by a frame spring consisting of two parallel U-shaped lateral elements (25, 25a) of resilient wire secured to the valve (8) by means of their bases (26, 26a), and by two cross-pins (24, 24a) located at right angles to the lateral elements (25, 25a) and adapted to connect the corresponding arms of the U-shaped element, the link-arms (23, 23a) being pivotally attached to said cross-pins.

4. A device according to claim 3, characterized in that each lateral element (25, 25a) is provided with at least one resilient loop (30, 30a) at each corner of the U.

5. A device according to claim 1, characterized in that the valve is provided with a rigid seal (9) and with a flexible seal (12) which is capable of flexural deformation in a direction parallel to the displacement of said valve (8).

6. A device according to claim 1, characterized in that the cylinder (1) is constituted by a sleeve closed by the distributor body (6a) at one end whilst the other end opens into the internal space (5) of a bell-shaped casing (4) which covers said sleeve and is closed by the distributor body (6a) in fluid-tight manner, said distributor body being provided with orifices (18, 19a) for establishing a direct communication on the one hand with the adjacent cylinder chamber and on the other hand with the annular space provided between said sleeve and said casing.

7. A device according to claim 6, characterized in that said sleeve is of glass.

FIG.1

FIG. 2

EP 0 217 699 B1

FIG. 3

FIG. 3A

FIG. 4